# EUROPEAN PATENT SPECIFICATION

(11) **EP 1 101 537 B1**
(45) Date of publication and mention of the grant of the patent: **01.06.2005**
(21) Application number: 00123500.1
(22) Date of filing: 08.11.2000
(51) Int. Cl.: B05C 5/02, B29C 47/08

(54) **Spreading head, particularly for thermoplastic material**
Beschichtungsvorrichtung, insbesondere für thermoplastisches Material
Répandeuse, plus particulièrement pour des matériaux thermoplastiques

(30) Priority: 16.11.1999 IT TV990124
(43) Date of publication of application: 23.05.2001
(73) Proprietor: Hip-Mitsu S.R.L., 31027 Spresiano (Treviso), Frazione Visnadello (IT)
(72) Inventor: Arnaboldi, Riccardo, 36040 Torre di Quartesolo (Vicenza) (IT)
(74) Representative: Modiano, Guido, Dr.-Ing.

(56) References cited:
- EP-A- 0 539 971
- EP-A- 0 577 136
- US-A- 5 067 432
- US-A- 5 650 011
- US-A- 5 728 219

## Description

The present invention relates to a spreading head, particularly for spreading thermoplastic material on a blank (see, for example, EP-A-0 539 971, corresponding to the preambles of claims 1 and 2).

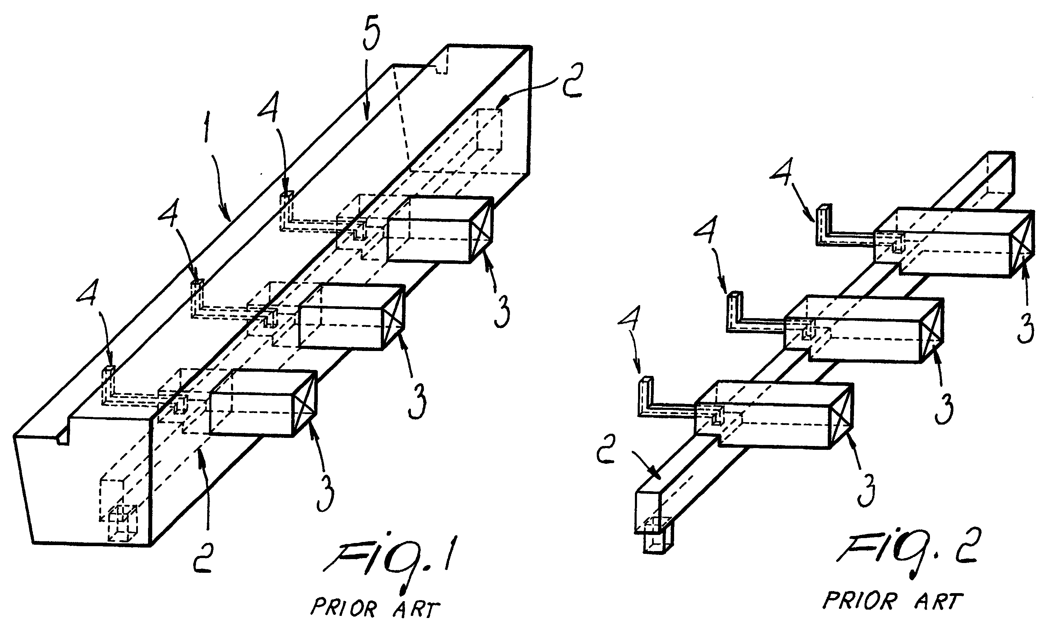

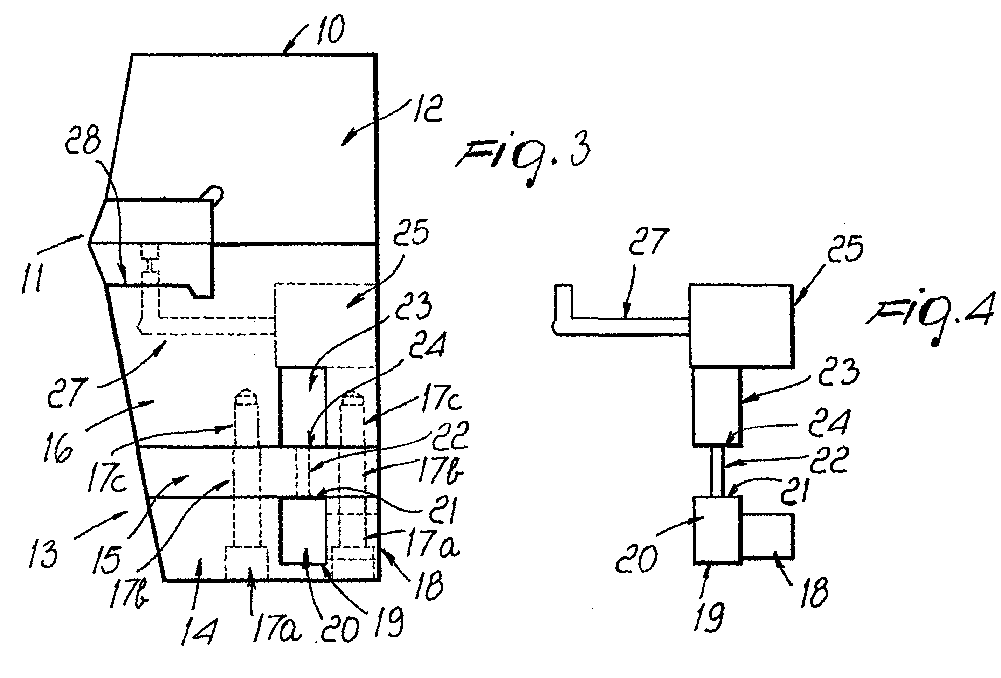

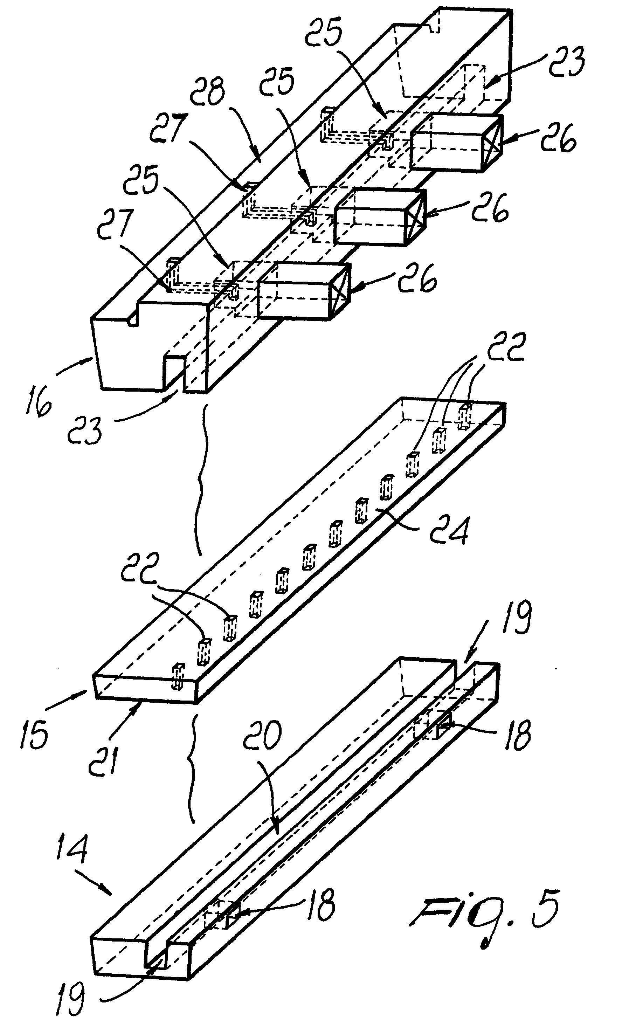

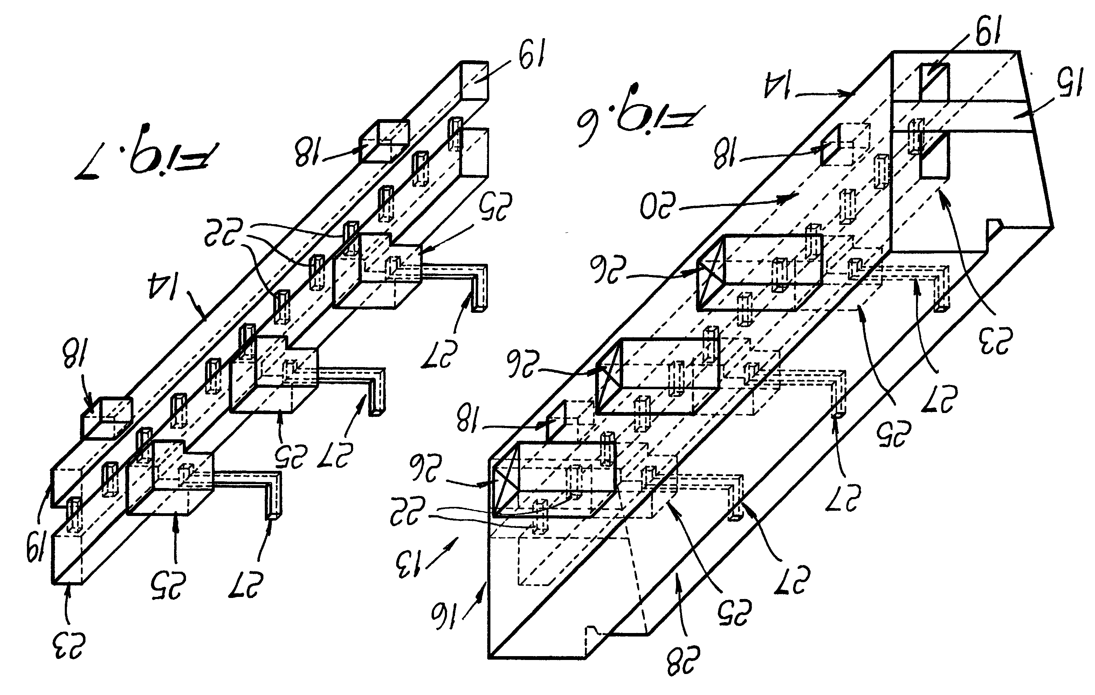

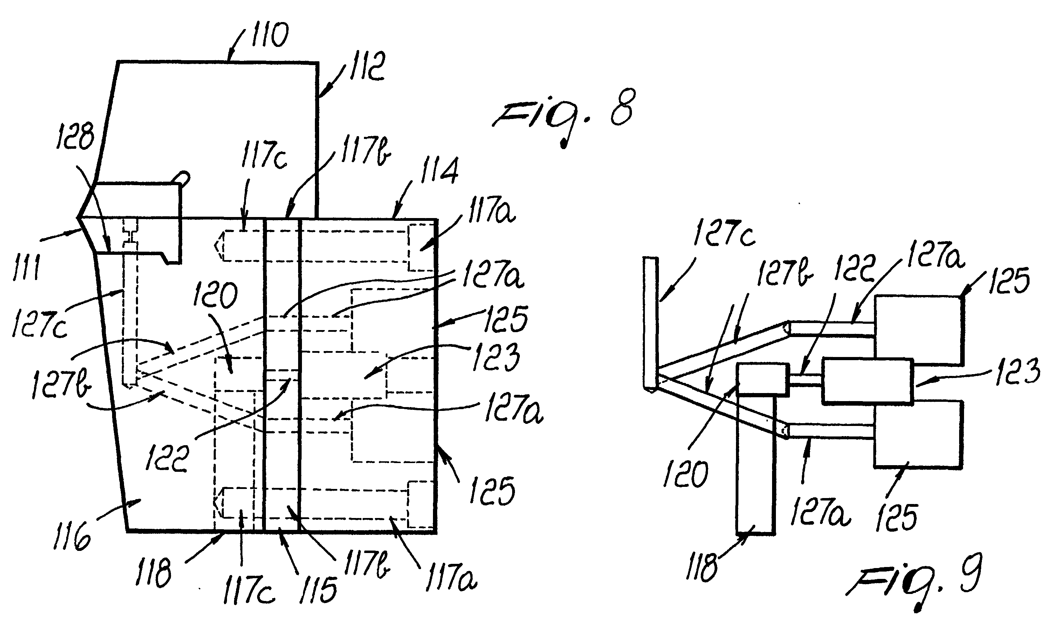

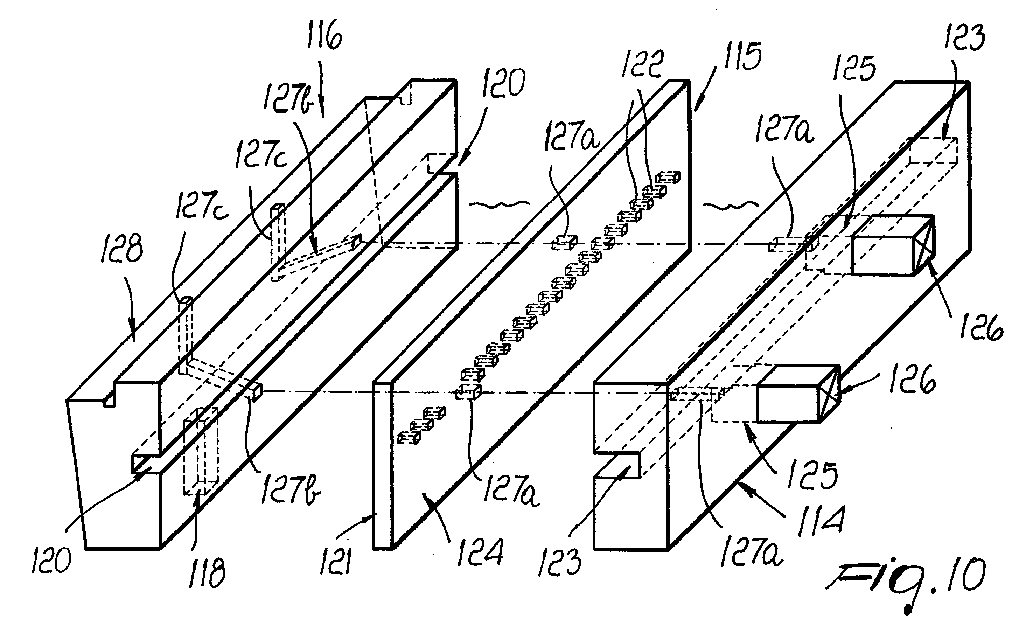

Conventional spreading heads, shown in Figures 1 and 2, are currently used which are usually arranged transversely to the direction in which the blank travels.

The head is usually composed of a lamination unit which has a beak-shaped cross-section and an upper clamping block, both not shown in the figures, and an underlying lower clamping block, designated by the reference numeral 1.

Alternatively, above the lower clamping block 1 there can be a single device which performs the functions of the lamination unit and of the upper clamping block.

The thermoplastic material (for example adhesives including those known as "hot-melt" or "reactive hot melt" adhesives) is melted beforehand by means of an adapted continuous melting unit or a drum unloader and is then injected into the spreading head by means of gear pumps, not shown.

Transverse distribution of the adhesive is performed by means of a closed duct 2, controlled at regularly spaced positions by valves, designated by the reference numeral 3, which determine the passage of the adhesive to a second lamination region, through channels 4, and optionally to a third region.

Channels 4 convey the adhesive directly to the lamination unit, which is directly connected to the blank.

The main drawback of such conventional head is the fact that it has the limitation that its duct 2, adapted for the first lamination, is of the "closed-section" type and therefore does not allow easy access for complete cleaning.

The problem of cleaning is very important for the optimum operation of the head, since there can be many contamination factors, including: the accidental penetration of external agents which block one or more of the channels 4 that branch out toward the subsequent stages; mixing of different products which are chemically incompatible, triggering polymerization phenomena and consequent blockage of the channels 4; carbonization of the thermoplastic materials used, with a consequent "flue effect"; strong adhesion of the thermoplastic materials to the walls of the duct 2 and of the channels 4, consequently blocking and/or reducing their cross-sections; irreversible polymerization of water-reactive polymers.

The cited drawback related to the impossibility to perform accurate cleaning of the head leads to other subsequent drawbacks.

Partial blockage of the duct 2 or of some channels 4 of the head can in fact occur, consequently producing uneven dispensing over the entire adhesive application opening, or some channels 4 can become fully blocked, consequently failing to dispense the adhesive in some regions of the section.

These drawbacks are partially solved by the prior art by means of two types of head cleaning: chemical cleaning, by circulating an adapted cleaning product, and mechanical cleaning, directly removing the material that blocks the affected parts.

The result of chemical cleaning is often only partial, due to the variable aggressiveness of the cleaning product with respect to the contaminant.

Actually, the second option, i.e., mechanical cleaning, is by far the most effective and widely used, although it too has several problems.

These problems are related to the fact that the first lamination line can be inspected only from its ends, and this entails considerable difficulty and time to perform mechanical cleaning.

Some conventional heads are provided with a duct which is obtained by joining contiguous segments: this solution is only a partial remedy to the problem and indeed entails a further complication which affects the manufacturing costs of the entire head. Examples of conventional dispenser for applying viscous liquid such as thermoplastic adhesives are disclosed in the U.S. Patent 5,788,219 and in said EP-A-0 539 971. In US 5,728,219 a modular die is disclosed, and the modularity of the structure of the die allows to vary the die heads which are selected from melt spraying and melt blowing, and linear bead applicators.

EP-A-0 539 971 discloses a dispenser which does not contact the substrate wherein the beads of viscous liquid can be dispensed intermittently without the escape of adhesive in string or strand form from the discharge outlet of the nozzle tips when the flow of adhesive is intermittently interrupted.

None of these prior art documents discloses or suggests a device which can be easily accessed for cleaning and which further allows optimum transverse distribution of the thermoplastic material.

Another drawback of conventional spreading machines is the lack of uniform transverse distribution of the thermoplastic material, caused by the unevenness of the pressures in the channels 4, particularly in very wide heads.

In order to obviate this drawback, the prior art uses an external flow equalization device, also known as manifold, which consists of a reservoir arranged upstream of the head and connected thereto by means of heated pipes, each of which is fed by a gear pump.

Said remedial device, however, is very expensive and further requires the additional use of several pumps.

The aim of the present invention is to solve the above-cited problems, eliminating the drawbacks of the cited prior art, by providing a spreading head which allows to obtain a head which can be easily accessed for cleaning, said head further allowing optimum transverse distribution of the thermoplastic material.

Within the scope of this aim, an object of the present invention is to provide a spreading head which does not require additional use of other machines, such as further pumps or auxiliary reservoirs.

Another object of the present invention is to provide a spreading head which is structurally simple and has low manufacturing costs.

This aim, these and other objects which will become better apparent hereinafter are achieved by a spreading head, according to claim 1 or 2.

Further features of the invention are disclosed in the dependent claims 3 to 21.

Further characteristics and advantages of the present invention will become better apparent from the following detailed description of a particular embodiment thereof, illustrated only by way of non-limitative example in the accompanying drawings, wherein:
Figure 1 is a perspective view of the lower clamping block of a conventional head;
Figure 2 is a perspective view of the path of the flows of thermoplastic material in ducts and valves of a conventional lower clamping block;
Figure 3 is a side view of a head according to the invention;
Figure 4 is a side view of the path of the flows of thermoplastic material in the ducts of a head according to the invention;
Figure 5 is an exploded perspective view of the lower clamping block according to the invention;
Figure 6 is a perspective view of the lower clamping block of a head according to the invention;
Figure 7 is a perspective view of the path of the flows of thermoplastic material in the ducts and valves of a lower clamping block of a head according to the invention;
Figure 8 is a side view of a different embodiment of the head according to the invention;
Figure 9 is a side view of the path of the flows of thermoplastic material in the ducts of a different embodiment of the head according to the invention;
Figure 10 is an exploded perspective view of a different embodiment of the lower clamping block according to the invention.

With reference to the above-cited figures, the reference numeral 10 designates a spreading head, particularly for spreading thermoplastic material on blanks.

The head 10 is preferably arranged transversely to the direction of travel of the blanks on which it is necessary to apply, for example, the adhesive, and has a lamination unit 11, an upper clamping block 12 and a lower clamping block, designated by the reference numeral 13.

The lower clamping block 13 is constituted by a first element, designated by the reference numeral 14 and arranged in a downward region, which advantageously has a rectangular or trapezoidal cross-section and lies transversely to the direction of travel of the blanks.

A second element 15 is superimposed on the first element 14 and has a lateral surface which preferably mates with the lateral surface of the first element 14.

A third element, designated by the reference numeral 16, is arranged above the second element 15 and also has a lateral surface which advantageously mates with the lateral surface of the second element 15 and can be associated above the lamination unit 11 and the upper clamping block 12.

The first element 14, the second element 15 and the third element 16 can be detachably secured to each other by virtue of appropriate mechanical connection means, advantageously constituted by a plurality of screws, not shown in the figure, which can be arranged in adapted through holes formed in the first element 14 and the second element 15 and respectively designated by the reference numerals 17a and 17b.

The through holes 17a and 17b are formed along an axis which is perpendicular to the axis along which lamination of the adhesive on said blanks occurs, and are connected to appropriate complementarily threaded blind holes 17c formed in said third element 16 and adapted to rigidly couple said screws.

The first element 14 has, on its lateral surface, one or more rear inlets 18; in this embodiment there are two rear inlets, and possibly two other lateral inlets, designated by the reference numeral 19, which allow the entry of the adhesive into a first longitudinal duct 20 of the head 10.

The first duct 20, advantageously having a rectangular cross-section, is formed in the upper surface of said first element 14 and is closed in an upward region, when the lower clamping block 13 is assembled, by a first lower surface, designated by the reference numeral 21, of the second element 15.

The first lower surface 21 has, at said first duct 20, a plurality of first through channels, designated by the reference numeral 22, which are arranged vertically and advantageously have a narrower rectangular cross-section so as to allow a first lamination of the adhesive.

The first channels 22 are connected, in an upward region, to a second duct, designated by the reference numeral 23, which is formed longitudinally on the lower surface of the third element 16 and is appropriately arranged above the first duct 20 and parallel thereto.

The second duct 23, which also advantageously has a rectangular cross-section, is closed, in a downward region, once the lower clamping block 13 is assembled, by a second upper surface 24 of said second element 15.

Along said second duct 23, and above it, said third element 16 has, at appropriately regular intervals, a series of chambers 25 which are advantageously shaped like a parallelepiped and are adapted to accommodate respective complementarily shaped valves, designated by the reference numeral 26, which can be activated by horizontal translatory motion thereof at right angles to the second duct 23.

A second channel, designated by the reference numeral 27, branches out from each one of the chambers 25; said second channel is advantageously L-or S-shaped and is connected to a third upper surface, designated by the reference numeral 28, on which an adapted surface of said lamination unit 11 is associated.

Operation is therefore as follows: with reference to Figures 3 onward, the thermoplastic material, for example an adhesive, to be spread on the blanks enters the head 10 through one or more of the rear inlets 18 and lateral inlets 19.

Said inlets convey the adhesive into a first duct 20 which is formed in the first element 14 of the lower clamping block 13 of the head 10. The first duct 20, by being connected to a second duct 23 through the first channels 22 of said second element 15, sends the adhesive to the chambers 25.

Use of the second element 15, which constitutes a perforated plate to be interposed between the two longitudinal ducts, is meant to achieve more uniform dispensing in a transverse direction by balancing the pressures of the adhesive inside the ducts.

If the head is used on blanks which are not as wide as said head, the flow of adhesive to the lamination unit 11 is limited to the intended width by acting on the valves 26 so as to disconnect the unnecessary second channels 27.

The translatory motion of the valves 26 in a horizontal direction inside the head 10 causes said valves 26 to close the respective chambers 25.

The deactivated valves allow the adhesive to enter the respective second channels 27 and reach, from there, the lamination unit 11.

The cleaning of said head is considerably faster and more accurate, since the lower clamping block 13, affected by the presence of the adhesive and therefore subject to blockage, can be easily disassembled into its three components, all of which have easily accessible chambers and ducts.

It has thus been observed that the invention has achieved the intended aim and objects, a head 1 having been provided which has a lower clamping block 13 which is constituted by a first element, a second element and a third element which are superimposed and can be easily inspected for cleaning.

At the same time, the presence of the second element 15 leads to better pressure balancing and therefore to more uniform dispensing in a transverse direction.

The invention is of course susceptible of numerous modifications and variations, if within the scope of invention as defined in the claims.

Thus, for example, it is possible to provide a different embodiment of the invention in which a lower clamping block 113 is constituted by a first element, designated by the reference numeral 114 and arranged in the rear part, which has an advantageously rectangular cross-section and lies transversely to the direction of travel of the blanks.

A second element, designated by the reference numeral 115, is superimposed in front of said first element 114.

A third element 116 is arranged in front of said second element 115, which is interposed between said first element 114 and said third element 116, having a lateral surface which advantageously mates with the lateral surfaces of said first and third elements, said third element 116 being associable, in an upward region, with a lamination unit 111 and with an upper clamping block, designated by the reference numeral 112.

The first element 114, the second element 115 and the third element 116 can be detachably secured to each other by virtue of appropriate mechanical connection means, advantageously constituted by a plurality of screws, not shown, which are arranged on an axis which is approximately parallel to the axis along which the thermoplastic material, for example an adhesive, is laminated onto said blanks.

Said screws can be arranged in appropriate through holes which are formed in said first element 114 and said second element 115 and are designated by the reference numerals 117a and 117b respectively; said screws can further be rigidly coupled in appropriate complementarily threaded blind holes 117c formed in said third element 116.

The third element 116 has, on its lower surface, one or more inlets 118; this embodiment shows a single inlet, which allows the inflow of the adhesive into a first longitudinal duct 120 of the head 110.

The first duct 120, which advantageously has a rectangular cross-section, is formed in the rear surface of the third element 116 and is laterally closed, when the lower clamping block 113 is assembled, by a first front surface, designated by the reference numeral 121, of the second element 115.

The first front surface 121 has, at first duct 120, a plurality of first through channels which are mutually identical, are arranged on a same horizontal plane and are designated by the reference numeral 122; the channels have an advantageously narrower rectangular cross-section so as to allow a first lamination of the adhesive.

The first channels 122 are connected, in a rear region, to a second duct, designated by the reference numeral 123, which is formed in the front surface of the first element 114 along a longitudinal direction and is conveniently arranged to the rear of, and parallel to, the first duct 120.

The second duct 123, which also advantageously has a rectangular cross-section, is closed at the front, when the lower clamping block 113 is assembled, by a second rear surface 124 of the second element 115.

Along the second duct 123, and to the rear of it, the first element 114 has, at appropriately regular intervals, a series of chambers 125 which are advantageously shaped like a parallelepiped and are adapted to accommodate respective complementarily shaped valves, designated by the reference numeral 126, which can be activated by way of their horizontal translatory motion at right angles to the second duct 123.

The valves 126 are advantageously arranged alternately on staggered planes, so that one is connected in an upward region to the second duct 123 and the other one is connected thereto in a downward region.

In this manner a more compact device is obtained which has a smaller spacing between one valve and the next.

A second channel, designated by the reference numeral 127a, extends from each one of said chambers 125, is advantageously horizontal and passes, along the same axis, through the first and second elements 114 and 115.

The second channel 127a is connected to a third channel 127b which is formed in the third element 116 and is inclined upward or downward according to the position of the respective chamber 125; the third channel is connected to a fourth channel 127c which is advantageously vertical.

The fourth channel 127c ends at a third upper surface, designated by the reference numeral 128, of the third element 116 which is associable with a respective surface of the lamination unit 111.

The operation of this embodiment is fully similar to the operation of the previously described one, since the thermoplastic material, for example an adhesive, by entering from the lower inlet 118, passes through a first duct 120, first channels 122 and a second duct 123, distributing itself uniformly, if allowed by the position of the valves 126, in the chambers 125.

From there, through second channels 127, the adhesive reaches a lamination unit 111.

The useful width of this type of machine varies, according to the width of the blanks, in a discrete manner with a spacing between one width and the next which is proportional to the dimensions of the valves used.

The advantage of this second embodiment consists of the fact that it is possible to reduce the spacing between one useful width and the next, since the valves are arranged in a staggered and superimposed configuration.

In this manner, if for example one uses valves measuring approximately 30 mm, which accordingly entails, in the first embodiment, a spacing of approximately 100 mm between one valve and the next, in the variation described here it is possible to have a smaller spacing, down to 50 mm, with consequent better adaptability to the dimensions of the blanks.

This solution, too, therefore achieves the intended aim and objects.

The materials used, as well as the dimensions that constitute the individual components of the invention, may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A spreading head, particularly for spreading thermoplastic material on a blank, comprising a lower clamping block (13, 113), a lamination unit (11, 111) and an upper clamping block (12, 112), which is arranged transversely to the direction of travel of said blank, **characterized in that** said lower clamping block (13, 113) is constituted by a first element (14, 114) and a third element (16, 116) which can be detachably coupled to each other by virtue of mechanical connection means, said first element (14, 114) having a first longitudinal duct (20, 120) which is connected to a second longitudinal duct (23, 123) formed in said third element (16, 116).

2. A spreading head (10), particularly for uniformly spreading thermoplastic material on a blank, comprising a lower clamping block (13, 113), a lamination unit (11, 111) and an upper clamping block (12, 112), which is arranged transversely to the direction of travel of said blank, **characterized in that** said lower clamping block (13, 113) is constituted by a first element (14, 114), a second element (15, 115), and a third element (16, 116) which are mutually detachably coupled by virtue of mechanical connection means, said first element (14, 114) having a first longitudinal duct (20, 120) which is connected to a plurality of first channels (22, 122) formed in said second element (15, 115), said first channels (22), which are through channels and are arranged vertically, having a cross-section with smaller dimensions with respect to said longitudinal duct (20, 120) so as to allow a first lamination of the thermoplastic material and to perform a pressure balancing of the molted fluid in a transverse direction in order to achieve a uniform dispensing of thermoplastic material in a transverse direction, said third element (16, 116) having a second longitudinal duct (23, 123) which is connected to said first channels (22, 122) and to a series of chambers (25, 125) each chamber being associated with a second channel (27, 127), said second channel (27, 127) being associated with said lamination unit (11, 111) in order to uniformly spreading said thermoplastic material on a blank.

3. The head according to claim 2, **characterized in that** said first element (14) has a rectangular or trapezoidal cross-section and a lateral surface which preferably mates with the lateral surface of said second element (15) which is arranged above said first element (14), said third element (16) being arranged above said second element (14) and also having a lateral surface which advantageously mates with the lateral surface of said second element (15).

4. The head according to claim 3, **characterized in that** said mechanical connection means for the mutual detachable coupling of said first (14), second (15) and third (16) elements are constituted by a plurality of screws which can be arranged in adapted through holes (17a, 17b) formed in said first (14) and second (15) elements along an axis which is perpendicular to the axis along which lamination of the thermoplastic material on said blanks occurs, said screws being rigidly fixable in appropriate complementarily shaped blind holes (17c) formed in said third element (16).

5. The head according to any of the preceding claims 2 to 4, **characterized in that** said first element (14) has one or more inlets (18, 19) for the thermoplastic material, said inlets being preferably arranged on the lateral surface in a rear position and/or in a lateral position.

6. The head according to claim 5, **characterized in that** said inlets (18, 19) are connected to said first duct (20), formed in the upper surface of said first element (14) with a cross-section which is advantageously rectangular, said first duct (20) being closed in an upward region, when the lower clamping block (13) is assembled, by a first lower surface (21) of said second element (15).

7. The head according to claim 6, **characterized in that** said first channels (22), which are through channels and are arranged vertically, are formed at said first lower surface (21) and have a an advantageously rectangular cross-section with smaller dimensions than the rectangular cross-section of the first longitudinal duct (20, 120) so as to allow a first lamination of the thermoplastic material.

8. The head according to claim 7, **characterized in that** said first channels (22) are connected, in an upward region, to said second duct (23), which is formed longitudinally on the lower surface (21) of said third element (16) and is appropriately arranged above said first duct (20) and parallel thereto.

9. The head according to claim 6, **characterized in that** said second duct (23), which also advantageously has a rectangular cross-section, is closed in a downward region, when the lower clamping block (13) is assembled, by a second upper surface (24) of said second element (15).

10. The head according to any of the preceding claims 2 to 9, **characterized in that** it has, along and above said second duct (23), said series of chambers (25) are arranged at appropriately regular intervals, said chambers (25) being advantageously shaped like a parallelepiped and being adapted to accommodate respective complementarily shaped valves (26) which can be activated by virtue of a horizontal translatory motion thereof at right angles to said second duct (23).

11. The head according to claim 2, **characterized in that** a second channel (27) is associated with each one of said chambers (25), said channel being advantageously L-shaped or S-shaped and being connected to a third upper surface (28) on which an adapted surface of said lamination unit (11) is associated.

12. The head according to claim 2, **characterized in that** said first element (114) is arranged in the rear part of said lower clamping block (113), said second element (115) is arranged in front of said first element (114), said third element (116) is arranged in front of said second element (115) which has a lateral surface which advantageously mates with the lateral surfaces of said first (114) and third (116) elements and is interposed between them, said first (114), second (115) and third elements (116) being mutually lockable by means of screws arranged along an axis which is approximately parallel to the lamination axis. 12

13. The head according to claim 12, **characterized in that** said third element (116) has, preferably on its lower surface, one or more inlets (118) for the thermoplastic material. 13

14. The head according to claim 13, **characterized in that** said inlets (118) are connected to said first duct (120) which advantageously has a rectangular cross-section and is arranged longitudinally, said first duct (120) being formed in the rear surface of said third element (116) and being laterally closed, when the lower clamping block (113) is assembled, by a first front surface (121) of said second element (115).

15. The head according to claim 14, **characterized in that** said first front surface (121) has said plurality of first through channels (122) which are mutually identical, are arranged on a same horizontal plane and have an advantageously rectangular cross-section which is narrower than the rectangular cross-section of the first longitudinal duct (20, 120) so as to allow a first lamination of the thermoplastic material.

16. The head according to anyone of claims 12 to 15, **characterized in that** said first channels (122) are connected in a rear region to said second duct (123) which is formed in the front surface of said first element (114) along a longitudinal direction and is advantageously arranged to the rear of said first duct (120) and parallel thereto.

17. The head according to claim 16, **characterized in that** said second duct (123), which also advantageously has a rectangular cross-section, is closed at the front, when the lower clamping block (113) is assembled, by a second rear surface (124) of said second element (115).

18. The head according to anyone of claims 12 to 17, **characterized in that** said series of chambers (125) are arranged at appropriately regular intervals, said chambers (125) being advantageously shaped like a parallelepiped and being adapted to accommodate respective complementarily shaped valves (126) which can be activated by horizontal translatory motion thereof at right angles to said second duct (123).

19. The head according to claim 18, **characterized in that** said valves (126) are advantageously arranged alternately on staggered planes, so that one is connected in an upward region to said second duct (123) and the other valve is connected thereto in a downward region.

20. The head according to claim 18 or 19, **characterized in that** a second channel (127a) is associated with each one of said chambers (125), is advantageously horizontal, and is formed along the same axis in said first (114) and second elements (115), said second channel (127a) being connected to a third channel (127b) which is formed in said third element (116) and is inclined upward or downward according to the position of the respective chamber (125).

21. The head according to claim 20, **characterized in that** said third channel (127b) is connected to a fourth channel (127c) which is advantageously vertical and exits at a third upper surface (128) of said third element (116) which is associable with a respective surface of said lamination unit (111).

## Patentansprüche

1. Beschichtungsvorrichtung insbesondere zum Beschichten eines Rohlings mit thermoplastischem Material, mit einem unteren Klemmblock (13, 113), einer Beschichtungseinheit (11, 111) und einem oberen Klemmblock (12, 112), der quer zu der Vorschubrichtung des Rohlings angeordnet ist, **dadurch gekennzeichnet, daß** der untere Klemmblock (13, 113) von einem ersten Element (14, 114) und einem dritten Element (16, 116) gebildet wird, die mittels mechanischer Verbindungsmittel lösbar miteinander verbunden werden können, wobei das erste Element (14, 114) eine erste in Längsrichtung verlaufende Leitung (20, 120) hat, die mit einer zweiten in Längsrichtung verlaufenden Leitung (23, 123) verbunden ist, die in dem dritten Element (16, 116) gebildet ist.

2. Beschichtungsvorrichtung (10) insbesondere zum gleichmäßigen Beschichten eines Rohlings mit thermoplastischem Material, mit einem unteren Klemmblock (13, 113), einer Beschichtungseinheit (11, 111) und einem oberen Klemmblock (12, 112), der quer zu der Vorschubrichtung des Rohlings angeordnet ist, **dadurch gekennzeichnet, daß** der untere Klemmblock (13, 113) von einem ersten Element (14, 114), einem zweiten Element (15, 115) und einem dritten Element (16, 116) gebildet wird, die mittels mechanischer Verbindungsmittel gegenseitig lösbar miteinander verbunden sind, wobei das erste Element (14, 114) eine erste in Längsrichtung verlaufende Leitung (20, 120) hat, die mit einer Vielzahl von ersten Kanälen (22, 122) verbunden ist, die in dem zweiten Element (15, 115) gebildet sind, wobei die ersten Kanäle (22), die Durchgangskanäle sind und vertikal angeordnet sind, einen Querschnitt mit kleineren Abmessungen bezüglich der in Längsrichtung verlaufenden Leitung (20, 120) haben, um eine erste Schichtbildung mit dem thermoplastischen Material zu gestatten und einen Druckausgleich der Schmelzflüssigkeit in einer Querrichtung auszuführen, um eine gleichmäßige Ausbreitung des thermoplastischen Materials in einer Querrichtung zu erzielen, wobei das dritte Element (16, 116) eine zweite in Längsrichtung verlaufende Leitung (23, 123) hat, die mit den ersten Kanälen (22, 122) und einer Reihe von Kammern (25, 125) verbunden ist, wobei jede Kammer mit einem zweiten Kanal (27, 127) verbunden ist, wobei der zweite Kanal (27, 127) mit der Beschichtungseinheit (11, 111) verbunden ist, um einen Rohling mit dem thermoplastischen Material gleichmäßig zu beschichten.

3. Vorrichtung nach Anspruch 2, **dadurch gekennzeichnet, daß** das erste Element (14) einen rechtwinkligen oder trapezförmigen Querschnitt und eine seitliche Fläche hat, die vorzugsweise mit der seitlichen Fläche des zweiten Elements (15) zusammenpaßt, das über dem ersten Element (14) angeordnet ist, wobei das dritte Element (16) über dem zweiten Element (14) angeordnet ist und auch eine seitliche Fläche hat, die vorteilhafterweise mit der seitlichen Fläche des zweiten Elements (15) zusammenpaßt.

4. Vorrichtung nach Anspruch 3, **dadurch gekennzeichnet, daß** die mechanischen Verbindungsmittel zum gegenseitigen lösbaren Verbinden des ersten (14), zweiten (15) und dritten (16) Elements von einer Vielzahl von Schrauben gebildet werden, die in angepaßten Durchgangslöchern (17a, 17b) angeordnet sind, die in dem ersten (14) und dem zweiten (15) Element entlang einer Achse gebildet sind, die senkrecht zu der Achse ist, entlang derer die Beschichtung der Rohlinge mit dem thermoplastischen Material auftritt, wobei die Schrauben in geeigneten komplementär geformten Sacklöchern (17c), die in dem dritten Element (16) gebildet sind, starr befestigbar sind.

5. Vorrichtung nach irgendeinem der vorhergehenden Ansprüche 2 bis 4, **dadurch gekennzeichnet, daß** das erste Element (14) einen oder mehrere Einlässe (18, 19) für das thermoplastische Material hat, wobei die Einlässe vorzugsweise auf der seitlichen Fläche in einer hinteren Position und/oder in einer seitlichen Position angeordnet sind.

6. Vorrichtung nach Anspruch 5, **dadurch gekennzeichnet, daß** die Einlässe (18, 19) mit der ersten Leitung (20) verbunden sind, die in der oberen Fläche des ersten Elements (14) mit einem Querschnitt gebildet ist, der vorteilhafterweise rechtwinklig ist, wobei die erste Leitung (20) in einem oberen Bereich durch eine erste untere Fläche (21) des zweiten Elements (15) geschlossen wird, wenn der untere Klemmblock (13) zusammengebaut wird.

7. Vorrichtung nach Anspruch 6, **dadurch gekennzeichnet, daß** die ersten Kanäle (22), die Durchgangskanäle sind und vertikal angeordnet sind, an der ersten unteren Fläche (21) gebildet sind und vorteilhafterweise einen rechtwinkligen Querschnitt mit kleineren Abmessungen als der rechtwinklige Querschnitt der ersten in Längsrichtung verlaufenden Leitung (20, 120) hat, um eine erste Beschichtung mit dem thermoplastischen Material zu gestatten.

8. Vorrichtung nach Anspruch 7, **dadurch gekennzeichnet, daß** die ersten Kanäle (22) in einem oberen Bereich mit der zweiten Leitung (23) verbunden sind, die in Längsrichtung verlaufend auf der unteren Fläche (21) des dritten Elements (16) gebildet ist und in geeigneter Weise über der ersten Leitung (20) und parallel dazu angeordnet ist.

9. Vorrichtung nach Anspruch 6, **dadurch gekennzeichnet, daß** die zweite Leitung (23), die vorteilhafterweise auch einen rechtwinkligen Querschnitt hat, in einem unteren Bereich durch eine zweite obere Fläche (24) des zweiten Elements (15) geschlossen wird, wenn der untere Klemmblock (13) zusammengebaut wird.

10. Vorrichtung nach irgendeinem der vorhergehenden Ansprüche 2 bis 9, **dadurch gekennzeichnet, daß** bei ihr die Reihe von Kammern (25) in geeigneten regelmäßigen Abständen an der zweiten Leitung (23) entlang und über ihr angeordnet ist, wobei die Kammern (25) vorteilhafterweise wie ein Parallelepiped geformt sind und ausgebildet sind, jeweils komplementär geformte Ventile (26) aufzunehmen, die durch eine horizontale translatorische Bewegung der Ventile im rechten Winkel zu der zweiten Leitung (23) aktiviert werden können.

11. Vorrichtung nach Anspruch 2, **dadurch gekennzeichnet, daß** ein zweiter Kanal (27) mit jeder der Kammern (25) verbunden ist, wobei der Kanal vorteilhafterweise L-förmig oder S-förmig ist und mit einer dritten oberen Fläche (28) verbunden ist, mit der eine angepaßte Fläche der Beschichtungseinheit (11) verbunden ist.

12. Vorrichtung nach Anspruch 2, **dadurch gekennzeichnet, daß** das erste Element (114) in dem hinteren Teil des unteren Klemmblockes (113) angeordnet ist, das zweite Element (115) vor dem ersten Element (114) angeordnet ist, das dritte Element (116) vor dem zweiten Element (115) angeordnet ist, das eine seitliche Fläche hat, die vorteilhafterweise mit den seitlichen Flächen des ersten (114) und dritten (116) Elements zusammenpaßt und zwischen ihnen angeordnet ist, wobei das erste (114), zweite (115) und dritte Element (116) mittels Schrauben gegenseitig blockierbar sind, die entlang einer Achse angeordnet sind, die annähernd parallel zu der Beschichtungsachse ist.

13. Vorrichtung nach Anspruch 12, **dadurch gekennzeichnet, daß** das dritte Element (116) vorzugsweise an seiner unteren Fläche einen oder mehrere Einlässe (118) für das thermoplastische Material hat.

14. Vorrichtung nach Anspruch 13, **dadurch gekennzeichnet, daß** die Einlässe (118) mit der ersten Leitung (120) verbunden sind, die vorteilhafterweise einen rechtwinkligen Querschnitt hat und in Längsrichtung verlaufend angeordnet ist, wobei die erste Leitung (120) in der hinteren Fläche des dritten Elements (116) gebildet ist und durch eine erste vordere Fläche (121) des zweiten Elements (115) seitlich geschlossen wird, wenn der untere Klemmblock (113) zusammengebaut wird.

15. Vorrichtung nach Anspruch 14, **dadurch gekennzeichnet, daß** die erste vordere Fläche (121) die Vielzahl von ersten Durchgangskanälen (122) hat, die zueinander identisch sind, auf der gleichen Horizontalebene angeordnet sind und vorteilhafterweise einen rechtwinkligen Querschnitt haben, der schmäler als der rechtwinklige Querschnitt der ersten in Längsrichtung verlaufenden Leitung (20, 120) ist, um eine erste Beschichtung mit dem thermoplastischen Material zu gestatten.

16. Vorrichtung nach irgendeinem der Ansprüche 2 bis 5, **dadurch gekennzeichnet, daß** die ersten Kanäle (122) in einem hinteren Bereich mit der zweiten Leitung (123) verbunden sind, die in der vorderen Fläche des ersten Elements (114) in einer Längsrichtung entlang gebildet ist und vorteilhafterweise hinter der ersten Leitung (120) und parallel dazu angeordnet ist.

17. Vorrichtung nach Anspruch 16, **dadurch gekennzeichnet, daß** die zweite Leitung (123), die auch vorteilhafterweise einen rechtwinkligen Querschnitt hat, an der Vorderseite durch eine zweite hintere Fläche (124) des zweiten Elements (115) geschlossen wird, wenn der untere Klemmblock (113) zusammengebaut wird.

18. Vorrichtung nach irgendeinem der Ansprüche 12 bis 17, **dadurch gekennzeichnet, daß** die Reihe von Kammern (125) in geeigneten regelmäßigen Abständen angeordnet ist, wobei die Kammern (125) vorteilhafterweise wie ein Parallelepiped geformt und ausgebildet sind, um jeweilige komplementär geformte Ventile (126) aufzunehmen, die durch eine horizontale translatorische Bewegung der Ventile im rechten Winkel zu der zweiten Leitung (123) aktiviert werden können.

19. Vorrichtung nach Anspruch 18, **dadurch gekennzeichnet, daß** die Ventile (126) vorteilhafterweise abwechselnd auf gestaffelten Ebenen angeordnet sind, so daß das eine in einem oberen Bereich mit der zweiten Leitung (123) und das andere Ventil in einem unteren Bereich damit verbunden ist.

20. Vorrichtung nach Anspruch 18 oder 19, **dadurch gekennzeichnet, daß** ein zweiter Kanal (127a) mit jeder der Kammern (125) verbunden ist, vorteilhafterweise horizontal ist und entlang der gleichen Achse in dem ersten (114) und zweiten Element (115) gebildet ist, wobei der zweite Kanal (127a) mit einem dritten Kanal (127b) verbunden ist, der in dem dritten Element (116) gebildet ist und nach oben oder nach unten entsprechend der Position der jeweiligen Kammer (125) geneigt ist.

21. Vorrichtung nach Anspruch 20, **dadurch gekennzeichnet, daß** der dritte Kanal (127b) mit einem vierten Kanal (127c) verbunden ist, der vorteilhafterweise vertikal ist und an einer dritten oberen Fläche (128) des dritten Elements (116) austritt, das mit einer jeweiligen Fläche der Beschichtungseinheit (111) verbindbar ist.

## Revendications

1. Tête d'enduction, en particulier pour enduire une pièce brute avec une matière thermoplastique, comprenant un bloc de serrage inférieur (13, 113), une unité de stratification (11, 111) et un bloc de serrage supérieur (12, 112), qui est agencé transversalement par rapport au sens du déplacement de ladite pièce brute, **caractérisée en ce que** ledit bloc de serrage inférieur (13, 113) est constitué d'un premier élément (14, 114), et d'un troisième élément (16, 116), qui peuvent être couplés l'un à l'autre, de manière détachable, grâce à un moyen de raccordement mécanique, ledit premier élément (14, 114) ayant une première conduite longitudinale (20, 120) qui est raccordée à une deuxième conduite longitudinale (23, 123) formée dans ledit troisième élément (16, 116).

2. Tête d'enduction (10), en particulier pour enduire une pièce brute uniformément avec une matière thermoplastique, comprenant un bloc de serrage inférieur (13, 113), une unité de stratification (11, 111) et un bloc de serrage supérieur (12, 112), qui est agencé transversalement par rapport au sens du déplacement de ladite pièce brute, **caractérisée en ce que** ledit bloc de serrage inférieur (13, 113) est constitué d'un premier élément (14, 114), d'un deuxième élément (15, 115) et d'un troisième élément (16, 116), qui sont couplés l'un à l'autre, de manière détachable, grâce à un moyen de raccordement mécanique, ledit premier élément (14, 114) ayant une première conduite longitudinale (20, 120) qui est raccordée à une pluralité de premiers canaux (22, 122) formés dans ledit deuxième élément (15, 115), lesdits premiers canaux (22), qui sont des canaux traversants et sont agencés verticalement, ayant une section transversale ayant des dimensions inférieures comparées à ladite conduite longitudinale (20, 120), de façon à permettre une première stratification de la matière thermoplastique et à effectuer un équilibrage de pression du fluide fondu dans un sens transversal, afin d'obtenir une distribution uniforme de la matière thermoplastique dans un sens transversal, ledit troisième élément (16, 116) ayant une deuxième conduite longitudinale (23, 123), qui est raccordée aux dits premiers canaux (22, 122) et à une série de chambres (25, 125), chaque chambre étant associée à un deuxième canal (27, 127), ledit deuxième canal (27, 127) étant associé à ladite unité de stratification (11, 111) afin d'enduire uniformément ladite pièce brute avec ladite matière thermoplastique.

3. Tête selon la revendication 2, **caractérisée en ce que** ledit premier élément (14) a une section rectangulaire ou trapézoïdale et une surface latérale qui, de préférence, s'apparie à la surface latérale dudit deuxième élément (15) qui est agencé au-dessus dudit premier élément (14), ledit troisième élément (16) étant agencé au-dessus dudit deuxième élément (14) et ayant également une surface latérale qui, avantageusement, s'apparie à la surface latérale dudit deuxième élément (15).

4. Tête selon la revendication 3, **caractérisée en ce que** ledit moyen de raccordement mécanique pour le couplage, de manière détachable, desdits premier (14), deuxième (15) et troisième (16) éléments entre eux, est constitué d'une pluralité de vis qui peuvent être agencées dans des trous traversants (17a, 17b) adaptés, formés dans lesdits premier (14) et deuxième (15) éléments le long d'un axe qui est perpendiculaire à l'axe selon lequel se produit la stratification de la matière thermoplastique sur ladite pièce brute, lesdites vis pouvant être fixées de manière rigide dans des trous aveugles de forme complémentaire (17c) appropriée, formés dans ledit troisième élément (16).

5. Tête selon l'une quelconque des revendications précédentes 2 à 4, **caractérisée en ce que** ledit premier élément (14) possède un ou plusieurs orifice (s) d'admission (18, 19) pour la matière thermoplastique, lesdits orifices d'admission étant, de préférence, agencés sur la surface latérale dans une position arrière et/ou dans une position latérale.

6. Tête selon la revendication 5, **caractérisée en ce que** lesdits orifices d'admission (18, 19) sont raccordés à ladite première conduite (20), formée dans la surface supérieure dudit premier élément (14), avec une section transversale qui, avantageusement, est rectangulaire, ladite première conduite (20) étant fermée dans une région située vers le haut, lorsque le bloc de serrage inférieur (13) est assemblé, par une première surface inférieure (21) dudit deuxième élément (15).

7. Tête selon la revendication 6, **caractérisée en ce que** lesdits premiers canaux (22), qui sont des canaux traversants et sont agencés verticalement, sont formés au niveau de ladite première surface inférieure (21) et ont une section transversale avantageusement rectangulaire avec des dimensions inférieures à la section transversale rectangulaire de la première conduite longitudinale (20, 120), de façon à permettre une première stratification de la matière thermoplastique.

8. Tête selon la revendication 7, **caractérisée en ce que** lesdits premiers canaux (22) sont raccordés, dans une région située vers le haut, à ladite deuxième conduite (23), qui est formée longitudinalement sur la surface inférieure (21) dudit troisième élément (16) et est agencée, de manière appropriée, au-dessus de ladite première conduite (20) et parallèlement à celle-ci.

9. Tête selon la revendication 6, **caractérisée en ce que** ladite deuxième conduite (23) qui, avantageusement, a également une section transversale rectangulaire, est fermée dans une région située vers le bas, lorsque le bloc de serrage inférieur (13) est assemblé, par une deuxième surface supérieure (24) dudit deuxième élément (15).

10. Tête selon l'une quelconque des revendications précédentes 2 à 9, **caractérisée en ce qu'**elle a, le long et au-dessus de ladite deuxième conduite (23), ladite série de chambres (25) agencées à des intervalles réguliers appropriés, lesdites chambres (25) ayant, avantageusement, la forme d'un parallélépipède et étant adaptées pour loger des soupapes de forme complémentaire respective (26) qui peuvent être actionnées grâce à un mouvement de translation horizontale de celles-ci à angle droit par rapport à ladite deuxième conduite (23).

11. Tête selon la revendication 2, **caractérisée en ce qu'**un deuxième canal (27) est associé à chacune desdites chambres (25), ledit canal ayant, avantageusement, une forme de L ou une forme de S et étant raccordé à une troisième surface supérieure (28) sur laquelle une surface adaptée de ladite unité de stratification (11) est associée.

12. Tête selon la revendication 2, **caractérisée en ce que** ledit premier élément (114) est agencé dans la partie arrière dudit élément de serrage inférieur (113), ledit deuxième élément (115) est agencé devant ledit premier élément (114), ledit troisième élément (116) est agencé devant ledit deuxième élément (115) qui a une surface latérale qui, avantageusement, s'apparie avec les surfaces latérales desdits premier (114) et troisième (116) éléments et est intercalée entre ceux-ci, lesdits premier (114), deuxième (115) et troisième (116) éléments pouvant être mutuellement bloqués au moyen de vis agencées le long d'un axe qui est sensiblement parallèle à l'axe de stratification.

13. Tête selon la revendication 12, **caractérisée en ce que** ledit troisième élément (116) a, de préférence sur sa surface inférieure, un ou plusieurs orifice(s) d'admission (118) pour la matière thermoplastique.

14. Tête selon la revendication 13, **caractérisée en ce que** lesdits orifices d'admission (118) sont raccordés à ladite première conduite (120) qui, avantageusement, à une section transversale rectangulaire et est agencée longitudinalement, ladite première conduite (120) étant formée dans la surface arrière dudit troisième élément (116) et étant fermée latéralement, lorsque le bloc de serrage inférieur (113) est assemblé, par ladite première surface avant (121) dudit deuxième élément (115).

15. Tête selon la revendication 14, **caractérisée en ce que** ladite première surface avant (121) a ladite pluralité de premiers canaux traversants (122) qui sont identiques entre eux, sont agencés sur un même plan horizontal, et ont une section transversale avantageusement rectangulaire qui est plus étroite que la section transversale rectangulaire de la première conduite longitudinale (20, 120), de façon à permettre une première stratification de la matière thermoplastique.

16. Tête selon l'une quelconque des revendications 12 à 15, **caractérisée en ce que** lesdits premiers canaux (122) sont raccordés dans une région arrière à ladite deuxième conduite (123) qui est formée dans la surface avant dudit premier élément (114) selon une direction longitudinale et est avantageusement agencée sur l'arrière de ladite première conduite (120) et parallèlement à celle-ci.

17. Tête selon la revendication 16, **caractérisée en ce que** ladite deuxième conduite (123), qui, avantageusement, a également une section transversale rectangulaire, est fermée sur le devant, lorsque le bloc de serrage inférieur (113) est assemblé, par une deuxième surface arrière (124) dudit deuxième élément (115).

18. Tête selon l'une quelconque des revendications 12 à 17, **caractérisée en ce que** ladite série de chambres (125) sont agencées à des intervalles réguliers appropriés, lesdites chambres (125) ayant avantageusement une forme semblable à un parallélépipède et étant adaptées pour loger des soupapes de forme complémentaire respective (126), qui peuvent être actionnées grâce à un mouvement de translation horizontale de celles-ci à angle droit par rapport à ladite deuxième conduite (123).

19. Tête selon la revendication 18, **caractérisée en ce que** lesdites soupapes (126) sont agencées, avantageusement, en alternance, sur des plans en quinconce, de telle sorte que l'une est raccordée dans une région située vers le haut à ladite deuxième conduite (123) et que l'autre soupape est raccordée à celle-ci dans une région située vers le bas.

20. Tête selon la revendication 18 ou 19, **caractérisée en ce qu'**un deuxième canal (127a) est associé à chacune desdites chambres (125), est avantageusement horizontal, et est formé selon le même axe dans lesdits premier (114) et deuxième (115) éléments, ledit deuxième canal (127a) étant raccordé à un troisième canal (127b) qui est formé dans ledit troisième élément (116) et est incliné vers le haut ou vers le bas, selon la position de la chambre (125) respective.

21. Tête selon la revendication 20, **caractérisée en ce que** ledit troisième canal (127b) est raccordé à un quatrième canal (127c) qui est, avantageusement, vertical et sort au niveau d'une troisième surface supérieure (128) dudit troisième élément (116), qui peut être associé avec une surface respective de ladite unité de stratification (111).
